Europäisches Patentamt

European Patent Office

Office européen des brevets

(19)

(11) Numéro de publication : **0 185 352**
**B1**

# FASCICULE DE BREVET EUROPÉEN

(12)

(45) Date de publication du fascicule du brevet :
19.07.89

(21) Numéro de dépôt : 85116079.6

(22) Date de dépôt : 17.12.85

(51) Int. Cl.⁴ : **F 02 F   3/00**, **F 16 J   1/14**

(54) **Piston à structure allégée, notamment pour un moteur à combustion interne.**

(30) Priorité : 20.12.84 FR 8419533

(43) Date de publication de la demande :
25.06.86 Bulletin 86/26

(45) Mention de la délivrance du brevet :
19.07.89 Bulletin 89/29

(84) Etats contractants désignés :
BE CH DE FR GB IT LI NL SE

(56) Documents cités :
DE–B– 1 081 289
FR–A– 675 593
FR–A– 2 150 044
FR–A– 2 381 181
FR–A– 2 388 140

(73) Titulaire : **SOCIETE D'ETUDES DE MACHINES THER-**
**MIQUES S.E.M.T.**
**2, Quai de Seine**
**F-93202 Saint-Denis (FR)**

(72) Inventeur : **Ayoul, Philippe**
**54, avenue Paul Doumer**
**F-93330 Neuilly Sur Marne (FR)**

(74) Mandataire : **Weinmiller, Jürgen et al**
**Lennéstrasse 9 Postfach 24**
**D-8133 Feldafing (DE)**

**Description**

La présente invention concerne un piston, notamment pour un moteur a combustion interne, comportant une tête et un corps monobloc ou en deux parties, muni d'un palier recevant une pièce d'articulation, telle qu'un axe ou une rotule, fixée rigidement à l'extrémité d'une bielle.

Les pistons de ce type ont généralement un corps en alliage léger, mais lorsque les pressions de combustion atteignent des valeurs très élevées, par exemple 200 bars ou au-delà, il apparaît, dans la paroi du palier, des contraintes supérieures à ce que peut supporter cet alliage léger.

Il faut alors évoluer vers un matériau plus résistant, par exemple la fonte. Si la même structure de corps de piston est conservée, le poids devient prohibitif et les contraintes thermiques trop importantes.

On peut, d'une façon connue, apporter une première amélioration en réalisant une jupe de guidage séparée, distincte du corps. L'utilisation d'un matériau différent de celui du corps permet de conférer à cette jupe des caractéristiques spécifiques telles qu'un bas coefficient de frottement et une plus grande légèreté. Les caractéristiques mécaniques du piston en seront donc améliorées mais sans toutefois atteindre la légèreté d'un corps de piston réalisé entièrement en alliage léger.

On connaît, notamment par le document DE 1 081 289, un piston constitué d'une tête prolongée de façon monobloc par une jupe, et d'un corps monobloc muni d'un palier recevant une pièce d'articulation fixée rigidement à l'extrémité d'une bielle, ce palier comportant, côté tête de piston, une paroi formant palier dont la portée est continue. Le corps comporte un élément de transmission et de répartition des efforts mécaniques de la tête à l'axe, cet élément étant une seule cloison mince, circulaire au niveau de la portée de la tête et aplatie au niveau de l'axe. Une cloison unique ayant une telle structure ne peut supporter des pressions de combustion élevées car la tête est insuffisamment stabilisée géométriquement, les nervures destinées à rigidifier la portée de l'axe étant par ailleurs le siège de contraintes très élevées. De plus, le corps n'est pas organisé pour recevoir une jupe séparée qui pourrait être réalisée dans un matériau plus léger.

On connaît, d'autre part, notamment par le document FR-B-2 150 044, un piston comportant une tête et un corps monobloc muni d'un palier recevant une pièce d'articulation fixée rigidement à l'extrémité d'une bielle, ce palier comportant, côté tête de piston, une paroi formant palier dont la portée est continue. La tête prend appui sur le corps par l'intermédiaire de deux surfaces d'appui circulaires, une surface interne et une surface externe, mais le corps comporte une unique cloison mince d'allure tronconique assurant la transmission et la répartition des efforts mécaniques de la tête à l'axe.

La présence d'une seule cloison mince d'allure tronconique oblige de prévoir un diamètre de la surface d'appui circulaire interne proche du diamètre externe du piston. Dans ce cas la voûte centrale de la tête est fragilisée car sa portée est importante, et la partie externe de la tête est également fragilisée car elle est soumise à des efforts de flexion importants entre la surface d'appui interne située en regard d'une cloison de renfort et la surface d'appui externe sans cloison de renfort.

Le but de l'invention est de proposer un piston réalisé en un matériau résistant, par exemple la fonte, et capable de supporter des pressions de combustion très élevées tout en conservant un poids sensiblement égal à celui d'un piston en alliage léger. Ce but est atteint grâce à un dessin judicieux de la structure du corps, permettant de l'alléger et de limiter les déformations du palier sous les contraintes en prévoyant deux cloisons minces d'allure tronconique, chaque cloison s'appuyant sur une surface d'appui distincte.

Comme la surface d'appui externe repose sur une cloison qui participe à la transmission des efforts, le diamètre de la surface d'appui interne peut être réduit. Ceci limite la portée de la voûte centrale, et la flexion de la partie externe de la tête devient quasiment nulle.

La présente invention a pour objet un piston notamment pour un moteur à combustion interne, constitué d'une tête et d'un corps comportant une jupe et muni d'un palier recevant une pièce d'articulation fixée rigidement à l'extrémité d'une bielle, ce palier comportant, côté tête de piston, une paroi formant palier dont la portée est continue, la tête prenant appui sur le corps par l'intermédiaire d'au moins deux surfaces d'appui circulaires, caractérisé en ce que la partie du corps reliant la paroi formant palier aux surfaces d'appui est formée par au moins deux cloisons minces d'allure tronconique dont les axes médians sont rectilignes, chaque cloison s'appuyant sur une surface d'appui distincte, et en ce qu'une paroi annulaire relie entre elles les surfaces d'appui du corps de piston et définit, avec les deux cloisons minces d'une part et la paroi formant palier d'autre part, une première enceinte annulaire et, avec la tête de piston, une deuxième enceinte annulaire.

Il est décrit ci-après, à titre d'exemple et en référence aux dessins annexés, un piston selon l'invention.

La figure 1 est une vue en coupe diamétrale du piston, articulé sur une bielle à l'extrémité de laquelle est fixé un axe d'articulation.

La figure 2 est une vue en coupe selon II de la figure 1, dans laquelle l'axe et la bielle ne sont pas représentés.

La figure 3 est une vue de dessus en section selon III de la figure 2.

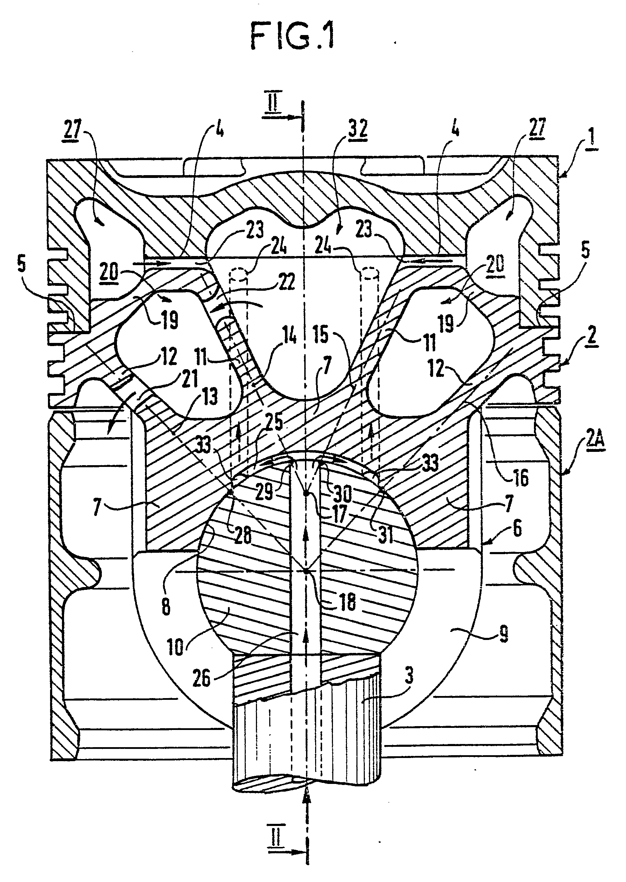

Dans la figure 1, il est représenté un piston selon l'invention comportant une tête 1 et un corps 2 articulé sur une bielle 3 par l'intermédiaire d'un axe d'articulation 10.

La tête 1 prend appui sur le corps 2 par l'intermédiaire de deux surfaces d'appui 4, 5 circulaires. Des moyens de fixation connus, non représentés, sont prévus entre la tête et le corps.

Le corps 2 présente, dans cette figure, une jupe séparée 2A mais bien entendu, le corps et la jupe pourraient être une seule et unique pièce.

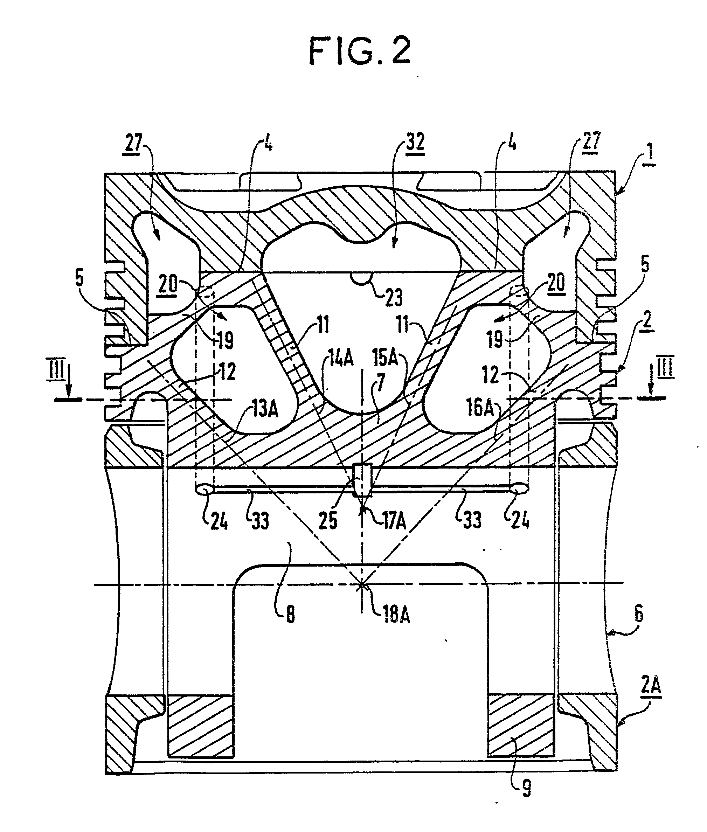

Le corps 2 comporte un palier 6 constitué, côté tête du piston, par une paroi 7 définissant un demi-palier continu sur toute la largeur du corps, et côté bielle, par deux demi-paliers 9 situés de part et d'autre de la bielle, un seul de ces demi-paliers étant représenté puisque la figure est en coupe. Ces deux demi-paliers 9 sont visibles en figure 2. La paroi 7 détermine une portée 8 demi-circulaire, sur toute la largeur du corps de piston, comme cela est visible en figure 2.

Ce palier 6 reçoit l'axe d'articulation 10 fixé sur l'extrémité de la bielle 3 par des moyens non représentés. Un coussinet pourrait bien entendu être rajouté entre le palier 8 et l'axe 10.

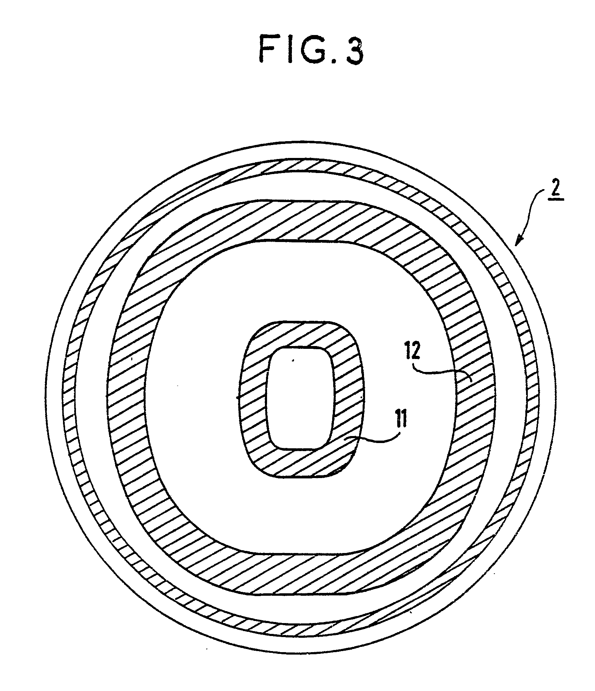

La paroi 7 est réunie à chaque surface d'appui 4, 5 circulaire par des cloisons 11, 12 minces, d'allure tronconique. L'épaisseur et le profil de ces cloisons ne sont pas nécessairement constants, et varient en fonction de la position d'un plan de coupe horizontal. La figure 3 montre la forme particulière des cloisons 11, 12.

Les surfaces d'appui 4, 5 sont reliées entre-elles par une cloison annulaire 19.

Cette cloison 19 relie donc entre eux les sommets des cloisons 11, 12 et participe activement à la rigidité du corps de piston.

Cette cloison annulaire 19 définit, avec les cloisons 11, 12 et la paroi 7 une enceinte annulaire 20, et avec la tête 1 une enceinte annulaire 27.

Le circuit d'huile nécessaire à la lubrification et au refroidissement est constitué par un orifice 26 par lequel arrive l'huile remontant dans la bielle, une rainure 25 réalisée dans la portée 8 de la paroi 7 ou dans un palier en cas de présence de celui-ci, deux petites rainures 33, bien visibles en figure 2, réalisées également dans la portée 8 de la paroi 7, deux canaux verticaux 24 débouchant dans l'enceinte 27, des canaux 23 répartis circonférentiellement et mettant l'enceinte 27 en communication avec une enceinte centrale 32, des canaux 22 mettant l'enceinte centrale 32 en communication avec l'enceinte annulaire 20, et enfin des canaux 21 mettant l'enceinte annulaire 20 en communication avec l'intérieur de la jupe 2A, l'huile redescendant ainsi dans le carter.

Les points de rencontre géométriques 17, 18 des axes médians des cloisons 11, 12, respectivement 14, 15 et 13, 16 se situent par rapport à la portée 8 de la paroi 7 du côté de l'axe 10.

La figure 2 montre d'autres axes médians des cloisons 11, 12, respectivement 14A, 15A et 13A, 16A. Les points de rencontre 17A, 18A de ces axes se situent, par rapport à la portée 8 de la paroi 7, du côté de l'axe 10. D'une manière générale, pour toute coupe diamétrale du piston, c'est-à-dire pour tous plans de coupe situés entre les plans de coupe des figures 1 et 2, les points de rencontre des axes médians sont situés du côté de l'axe 10.

Les points de rencontre 28, 29, 30, 31 des axes médians 13, 14, 15, 16 avec la portée 8 de la paroi 7, déterminent des segments, ou arcs de courbes successifs 28-29, 29-30, 30-31. Le rapport de longueur du plus petit segment sur la longueur du plus grand n'est pas inférieur à 0,1, et, de préférence, ces segments doivent avoir une longueur sensiblement voisine pour répartir au mieux les efforts sur la portée 8, entre les points 28 et 31.

## Revendications

1. Piston notamment pour un moteur à combustion interne, constitué d'une tête (1) et d'un corps (2) comportant une jupe (2A) et muni d'un palier (6) recevant une pièce d'articulation (10) fixée rigidement à l'extrémité d'une bielle (3), ce palier (6) comportant, côté tête de piston, une paroi (7) formant palier dont la portée (8) est continue, la tête prenant appui sur le corps (2) par l'intermédiaire d'au moins deux surfaces d'appui (4, 5) circulaires, caractérisé en ce que la partie du corps (2) reliant la paroi (7) formant palier aux surfaces d'appui (4, 5) est formée par au moins deux cloisons minces (11, 12) d'allure tronconique dont les axes médians (13, 14, 15, 16) sont rectilignes, chaque cloison s'appuyant sur une surface d'appui (4, 5) distincte, et en ce qu'une paroi annulaire (19) relie entre elles les surfaces d'appui (4, 5) du corps de piston et définit, avec les deux cloisons minces (11, 12) d'une part et la paroi (7) formant palier d'autre part, une première enceinte annulaire (20) et, avec la tête (1) de piston, une deuxième enceinte annulaire (27).

2. Piston selon la revendication 1, caractérisé en ce que, dans tout plan de coupe diamétral du piston contenant l'axe du piston, les points d'intersection (17, 18) des axes médians respectifs (14, 15, 13, 16) de chacune des cloisons (11, 12) sont situés, par rapport à la portée (8) de la paroi (7) formant palier, du côté de la pièce d'articulation (10).

3. Piston selon la revendication 2, caractérisé en ce que, dans tout plan de coupe diamétral contenant l'axe du piston, les points de rencontre (28 à 31) des axes médians (13 à 16) des cloisons (11, 12) avec la portée (8) de la paroi (7) formant palier, déterminent des segments et/ou arcs de courbes successifs (28-29 ; 29-30 ; 30-31) dont le rapport de la longueur du plus petit sur la longueur du plus grand n'est pas inférieur à 0,1.

4. Piston selon la revendication 1, caractérisé en ce que les deux enceintes annulaires (20, 27) font partie du circuit du fluide de refroidissement du piston, et sont mises en communication par des orifices (22, 23).

5. Piston selon l'une des revendications précédentes, caractérisé en ce que le corps (2) comporte une jupe séparée (2A).

## Claims

1. A piston, in particular for an internal combustion engine, consisting of a head and a body comprising a skirt (2A) and provided with a bearing (6) which receives an articulation member (10) rigidly fixed to an end of a connecting rod (3), said bearing (6) comprising, on the side of the piston head, a wall (7) forming a bearing, whose supporting surface (8) is continuous, the head bearing on the body (2) via at least two circular supporting surfaces (4, 5), characterized in that that part of the head (2) which joins the wall (7) forming a bearing with the supporting surfaces (4, 5) is constituted of at least two thin truncated partitions (11, 12), whose median axes (13, 14, 15, 16) are rectilinear, with each partition bearing on a distinct supporting surface (4, 5), and that an annular wall (19) interconnects the supporting surfaces (4, 5) of the piston body and defines, together with the two thin partitions (11, 12) on the one hand, and with the wall (7) forming a bearing on the other hand, a first annular chamber (20), and, with the inclusion of the piston head (1), a second annular chamber (27).

2. A piston according to claim 1, characterized in that in any given diametral cross-section of the piston which includes the piston axis, the intersection points (17, 18) on the respective median axes (14, 15, 13, 16) of the partitions (17, 18) are located on the side of the articulation member (10), in relation to the supporting surface (8) of the wall (7) which forms a bearing.

3. A piston according to claim 2, characterized in that in any given diametral cross-section including the piston axis, the meeting points (28 to 31) of the median axes (13 to 16) of the partitions (11, 12) with the supporting surface (8) of the wall (7) forming a bearing, define successive segments and/or curved arcs (28-29 ; 29-30 ; 30-31) whose ratio of the smallest length to the largest length is not less than 0,1.

4. A piston according to claim 1, characterized in that both annular chamber (20, 27) are part of the coolant fluid circuit of the piston and are interconnected by orifices (22, 23).

5. A piston according to any one of the preceding claims, characterized in that the body (2) comprises a separate skirt (2A).


**Patentansprüche**

1. Kolben, insbesondere für einen Verbrennungsmotor, bestehend aus einem Kopf (1) und einem Körper (2) mit einer Schürze (2A) und einem Lager (6), das ein mit dem Ende einer Kolbenstange (3) fest verbundenes Gelenkstück (10) aufnimmt und das auf der Seite des Kolbenkopfes eine Wand (7) aufweist, welche eine kontinuierliche Lagerfläche (8) bildet, während der Kopf über mindestens zwei kreisförmige Stützflächen (4, 5) auf dem Körper aufliegt, dadurch gekennzeichnet, daß der die als Lager für die Stützflächen (4, 5) wirkende Wand (7) anbindende Teil des Körpers (2) aus mindestens zwei dünnen, kegelstumpfartigen Zwischenwänden (11, 12) besteht, deren Mittelachsen (13, 14, 15, 16) geradlinig verlaufen, wobei jede Zwischenwand sich auf einer unterschiedlichen Stützfläche (4, 5) abstützt, und daß eine ringförmige Wand (19) die Stützflächen (4, 5) des Kolbenkörpers miteinander verbindet und zusammen mit den beiden dünnen Zwischenwänden (11, 12) einerseits und der als Lager wirkenden Wand (7) andererseits einen ersten Ringraum (20), und mit dem Kolbenkopf (1) einen zweiten Ringraum (27) bildet.

2. Kolben nach Anspruch 1, dadurch gekennzeichnet, daß in jeder diametralen Schnittebene durch den Kolben, in welcher die Kolbenachse enthalten ist, die Schnittpunkte (17, 18) der jeweiligen Mittelachsen (14, 15, 13, 16) jeder Zwischenwand (11, 12) bezüglich der Lagerfläche (8) der als Lager wirkenden Wand (7) auf der Seite des Gelenkstücks (10) liegen.

3. Kolben nach Anspruch 2, dadurch gekennzeichnet, daß in jeder diametralen Schnittebene, in welcher die Kolbenachse enthalten ist, die Treffpunkte (28 bis 31) der Mittelachsen (13 bis 16) der Zwischenwände (11, 12) auf der Lagerfläche (8) der als Lager wirkenden Wand (7) aufeinanderfolgende Segmente und/oder Kurvenbögen (28-29 ; 29-30 ; 30-31) definieren, bei denen das Verhältnis der kürzesten Länge zur größten Länge nicht kleiner als 0,1 ist.

4. Kolben nach Anspruch 1, dadurch gekennzeichnet, daß die beiden Ringräume (20, 27) Teil des Kühlflüssigkeitskreises des Kolbens sind und durch Öffnungen (22, 23) miteinander verbunden sind.

5. Kolben nach einem der vorhergehenden Ansprüche, dadurch gekennzeichnet, daß der Körper (2) eine getrennte Schürze (2A) aufweist.

# FIG.1

# FIG. 2

# FIG.3